(19) **Europäisches Patentamt European Patent Office Office européen des brevets**

(11) **EP 4 463 360 B1**

(12) **FASCICULE DE BREVET EUROPEEN**

(45) Date de publication et mention
de la délivrance du brevet:
**28.01.2026 Bulletin 2026/05**

(21) Numéro de dépôt: **22850658.0**

(22) Date de dépôt: **21.12.2022**

(51) Classification Internationale des Brevets (IPC):
***B62M 6/50*** *(2010.01)*

(52) Classification Coopérative des Brevets (CPC):
**B62M 6/50;** B62J 45/411

(86) Numéro de dépôt international:
**PCT/FR2022/052463**

(87) Numéro de publication internationale:
**WO 2023/135373 (20.07.2023 Gazette 2023/29)**

(54) **SYSTÈME D'ADAPTATION DE LA COMMANDE D'UN MOTEUR DE VÉLO ÉLECTRIQUE À LA RÉSISTANCE À L'AVANCEMENT**

SYSTEM ZUR ANPASSUNG DER STEUERUNG EINES ELEKTRISCHEN FAHRRADMOTORS AN DEN WIDERSTAND GEGEN VORWÄRTSFAHRT

SYSTEM FOR ADAPTING THE CONTROL OF AN ELECTRIC BICYCLE MOTOR TO THE RESISTANCE TO FORWARD TRAVEL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.01.2022 FR 2200216**

(43) Date de publication de la demande:
**20.11.2024 Bulletin 2024/47**

(73) Titulaire: **eBikeLabs
38000 Grenoble (FR)**

(72) Inventeurs:
• **JAILLET, Léonard
38000 Grenoble (FR)**
• **BOUJU, Rémi
38120 Saint Egrève (FR)**

(74) Mandataire: **de Jong, Jean Jacques et al
Omnipat
610 Chemin de Fabrègues
13510 Éguilles (FR)**

(56) Documents cités:
**DE-A1- 102019 106 585    JP-A- 2002 255 082
US-A1- 2019 291 812    US-A1- 2021 197 925**

EP 4 463 360 B1

## Description

### Domaine technique

L'invention est relative à l'amélioration de l'agrément de conduite d'un vélo à assistance électrique. Le document US 2021/197925 A1 divulgue les caractéristiques du préambule de la revendication 1.

### Arrière-plan

Dans le cas de vélos électriques équipés d'un capteur de couple, une boucle de régulation classique est configurée pour fournir au moteur une commande de couple (ou de courant) proportionnelle à l'effort fourni par le cycliste. Le coefficient de proportionnalité peut souvent être sélectionné par le cycliste entre plusieurs niveaux préprogrammés, souvent désignés par "niveaux d'assistance".

Pour un niveau d'assistance donné, l'utilisateur doit cependant adapter son effort aux changements des conditions de roulement (variations de pente, de vent, de nature du terrain). Par exemple, quand il attaque une pente, il doit augmenter son effort de pédalage s'il ne veut pas ralentir. Si l'effort ressenti devient trop important, l'utilisateur peut sélectionner un niveau d'assistance plus élevé ou un rapport de vitesses moins élevé, ou les deux.

Pour éviter que l'utilisateur n'ait à modifier souvent le niveau d'assistance dans des conditions difficiles, par exemple dans une montée technique en VTT, les systèmes de commande « Bosch® » proposent un mode dit "eMTB". Dans ce mode, le système de commande sélectionne automatiquement un niveau d'assistance adapté parmi les niveaux préprogrammés en fonction du couple mesuré au niveau du pédalier - lorsque le couple au pédalier augmente significativement, le contrôleur sélectionne automatiquement un niveau d'assistance plus élevé, et inversement.

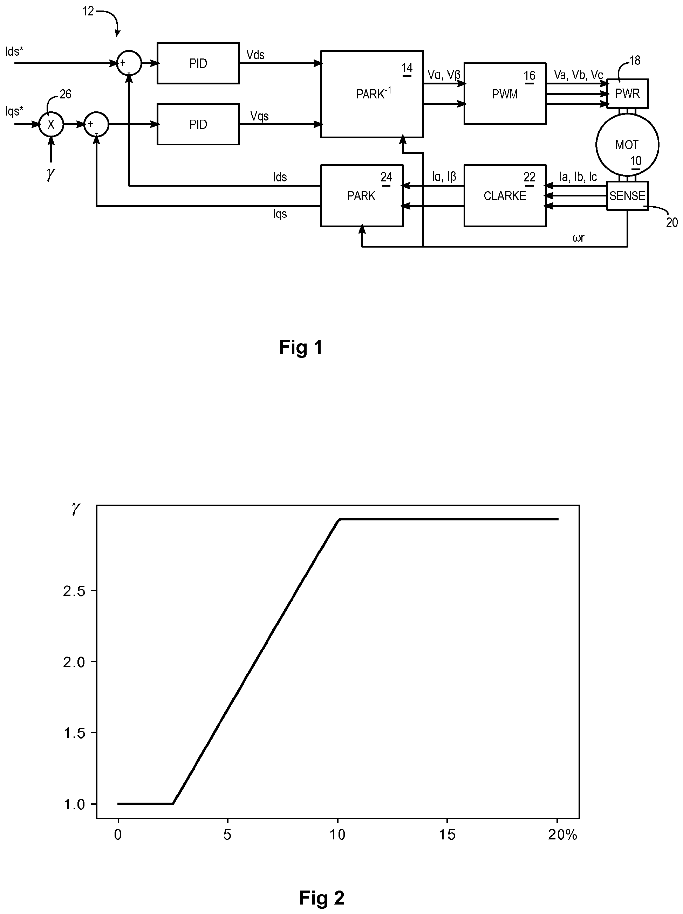

La figure 1 est un schéma bloc d'un circuit de commande à flux orienté classique, utilisable pour commander un moteur de vélo avec plusieurs niveaux d'assistance. Le moteur est par exemple de type sans balais à courant continu, comprenant un rotor aimanté et un stator à trois bobinages ou phases.

Le circuit de commande à flux orienté, aussi appelé circuit à commande vectorielle, reçoit un vecteur de consigne ayant une composante de flux Ids* et une composante de couple Iqs*. A ce vecteur de consigne est soustrait en 12 un vecteur de retour (Ids, Iqs) déterminé à partir des courants Ia, Ib, Ic mesurés dans les trois phases du moteur 10 et de la vitesse de rotation $\omega$r du moteur. Chacune des composantes du vecteur différence est traité par un filtre PID respectif pour produire un vecteur rotorique de composantes de tension Vds, Vqs. Le vecteur rotorique subit une transformée de Park inverse en 14 pour produire un vecteur statorique de composantes de tension V$\alpha$ et V$\beta$. La transformée de Park inverse utilise la vitesse de rotation $\omega$r. Le vecteur statorique sert à commander un modulateur de largeur d'impulsions 16. Le modulateur 16 produit trois signaux Va, Vb, Vc servant à commander chacune des trois phases du moteur par un étage de commutation de puissance 18.

Une boucle de retour comprend des capteurs 20 qui mesurent les courants Ia, Ib, Ic dans les trois phases, et la vitesse de rotation $\omega$r du moteur. Les courants Ia, Ib, Ic subissent une transformée de Clarke en 22 pour produire un vecteur statorique mesuré de composantes de courant I$\alpha$ et I$\beta$. Une transformée de Park 24 reçoit le vecteur statorique mesuré et la vitesse de rotation mesurée $\omega$r pour produire un vecteur rotorique mesuré de composantes de courant Ids et Iqs, les composantes qui sont soustraites à la consigne en 12.

Pour agir sur le niveau d'assistance, on multiplie la consigne de couple Iqs* en 26 par un coefficient de modulation y, qui est classiquement sélectionné parmi des valeurs discrètes, s'échelonnant souvent entre 1 et 3.

### Résumé

On prévoit de façon générale un procédé de commande d'un moteur électrique de véhicule à pédalier, comprenant les étapes suivantes : mesurer un couple appliqué sur le pédalier ; appliquer au moteur électrique une commande proportionnelle au produit du couple par un niveau d'assistance variable ; déterminer un paramètre indicatif d'un écart de la résistance à l'avancement du véhicule par rapport à des conditions nominales, comme une combinaison linéaire d'une mesure du couple du moteur, indicative d'une force instantanée fournie par le moteur, de la mesure du couple appliqué sur le pédalier, indicative d'une force instantanée résultant du pédalage, et d'une force nominale de résistance à l'avancement, fonction de la vitesse et de coefficients de frottement constants déterminables pour des conditions de roulement nominales ; moduler continument le niveau d'assistance en fonction du paramètre indicatif de l'écart.

La combinaison linéaire implique de préférence une différenciation de mesures de vitesse instantanée, indicative d'une accélération du véhicule.

Le paramètre indicatif de l'écart peut être la somme de la force instantanée fournie par le moteur et de la force instantanée fournie par le pédalage, à laquelle est soustraite la force nominale de résistance à l'avancement et une force d'inertie égale au produit de l'accélération par une masse moyenne du véhicule avec sa charge.

Le niveau d'assistance peut augmenter proportionnellement au paramètre indicatif de l'écart entre deux seuils du paramètre indicatif.

Le paramètre indicatif de l'écart peut être soumis à un lissage.

**Description sommaire des dessins**

Des modes de réalisation seront exposés dans la description suivante, faite à titre non limitatif en relation avec les figures jointes parmi lesquelles :

La figure 1, précédemment décrite, représente un schéma-bloc d'un système de commande classique à flux orienté utilisé pour des moteurs électriques de vélo, auquel la présente invention est applicable ;

La figure 2 illustre un mode de réalisation de courbe de variation continue du niveau d'assistance en fonction de la résistance à l'avancement ; et

La figure 3A, la figure 3B et la figure 3C sont des courbes illustrant, dans un exemple d'utilisation réel, les évolutions respectives du niveau d'assistance, du courant moteur, et du couple au pédalier exercé par un cycliste attaquant une pente.

**Description détaillée**

Les systèmes de commande de moteur classiques opérant une adaptation automatique du niveau d'assistance, comme le mode "eMTB" susmentionné, agissent en fonction des variations du couple mesuré au pédalier. Toute variation de couple n'est pas forcément indicative d'un changement de résistance à l'avancement durable, ce qui peut provoquer des désagréments de conduite dans des conditions n'exigeant pas de modifications significatives du niveau d'assistance, comme en conditions urbaines. Par exemple, une variation du couple au pédalier peut être dû à un utilisateur qui souhaite modifier son rythme de pédalage en roulant à plat, auquel cas il ne souhaite pas subir une modification d'assistance brutale. En revanche, l'utilisateur pourrait souhaiter une augmentation du niveau d'assistance lorsqu'il attaque une côte, et que ce niveau d'assistance augmente progressivement en fonction de la pente.

Pour augmenter l'agrément de conduite dans des conditions ne nécessitant pas des sauts de puissance d'assistance, comme en conditions urbaines, on propose dans la présente demande d'opérer une modification automatique et continue du niveau d'assistance en fonction d'un paramètre représentant les variations réelles de la résistance à l'avancement.

La figure 2 illustre un exemple de courbe de variation d'un coefficient de modulation du niveau d'assistance y selon cet objectif, en fonction d'un paramètre représentant la résistance à l'avancement, par exemple la pente, exprimée en pour cent. Jusqu'à 2,5 % de pente, le niveau d'assistance reste constant et égal à sa valeur nominale, ici 1. A partir de 2,5 %, le coefficient de modulation augmente linéairement en fonction de la pente pour saturer à 3 lorsque la pente atteint 10 %.

On a indiqué la pente à titre d'exemple, mais on cherche à utiliser ci-après un paramètre plus général indicatif de toute cause de résistance à l'avancement, comme la pente, le vent de face, ou la nature du terrain, et cela en utilisant les informations disponibles sur un vélo à assistance électrique classique.

La dynamique d'un vélo électrique peut s'écrire de la façon suivante :

$$\mathrm{Mt} \cdot \mathrm{Av} = \mathrm{Fm} + \mathrm{Fc} - \mathrm{Fr} \qquad (1)$$

Où :

Av est l'accélération,

Mt la masse mobilisée (vélo, cycliste et bagages),

Fm la force de traction du moteur,

Fc la force exercée par le cycliste, et

Fr les forces de résistance à l'avancement.

Il s'agit donc d'estimer les forces Fr pour agir sur le niveau d'assistance. Il s'avère qu'une estimation satisfaisante de ce paramètre est possible avec des données empiriques constantes et des informations variables fournies par les capteurs d'un vélo existant.

On note $Pr_{ref}$ les forces de résistance nominales dans le cas d'un parcours sur route bitumée standard et de pente nulle, sans vent. On désigne par $\Delta Fr$ les forces de résistance supplémentaires (potentiellement négatives) représentant l'écart de la résistance effective à l'avancement par rapport aux conditions nominales, comme la variation de la friction des roues avec la route, de la pente et du vent. On a ainsi :

$$Fr = Fr_{ref} + \Delta Fr \qquad\qquad (2)$$

Par ailleurs :

$$\Delta Fr = Ff + Fp + Fv, \text{ avec :}$$

    Ff : la force additionnelle due aux frictions effectives des roues avec la route.
    Fp : la force additionnelle due à la pente effective de la route.
    Fv : la force additionnelle due au vent effectif.

Et :

$$Fr_{ref} = K0 + K1 \cdot v + K2 \cdot v^2 \qquad\qquad (3)$$

Avec :

    v : la vitesse du vélo.
    K0 : les forces de résistance statiques à plat.
    $K1 \cdot v$ : les forces de friction visqueuses.
    $K2 \cdot v^2$ : le forces de friction aérodynamiques.
    K0 à K2 sont des constantes déterminables empiriquement.

En combinant (1) et (2), on obtient :

$$\Delta Fr = Fm + Fc - Mt \cdot Av - Fr_{ref} \qquad\qquad (4)$$

Le paramètre $\Delta Fr$ qui nous intéresse, indicatif de la résistance effective à l'avancement, plus précisément de l'écart de la résistance à l'avancement par rapport aux conditions nominales données, est évalué grâce aux termes de droite dans l'équation (4), qui peuvent tous être déterminés avec une précision satisfaisante avec les moyens disponibles sur une vélo électrique classique. En particulier :
La force moteur Fm peut être déterminée à partir de la valeur Iqs renvoyée par la boucle de contre-réaction du système de commande de la figure 1. Cette valeur Iqs, provenant des mesures des courants dans le moteur, est directement indicative du couple instantané fourni par le moteur. Ce couple se traduit par une force de traction exercée par la roue motrice en fonction du diamètre de celle-ci, qui est la force Fm contribuée par le moteur.

La force cycliste Fc peut être déterminée à partir de l'information de couple fournie par le capteur de couple monté sur le pédalier. Ce couple se traduit par une force de traction exercée par la roue motrice en fonction du braquet, qui est la force Fc contribuée par le cycliste.

La consigne de couple Iqs* fournie à la commande de la figure 1 est généralement aussi indicative du couple au pédalier.

La masse mobilisée Mt peut être approximée par la somme de la masse du vélo et d'une masse moyenne d'un individu avec sa charge.

L'accélération Av peut être déterminée en différenciant des échantillons de mesure de vitesse. Un vélo électrique peut disposer de différents capteurs de vitesse, notamment au niveau d'une roue pour indiquer la vitesse au cycliste, et en tout cas au niveau du moteur pour contribuer à la boucle de commande, comme la valeur $\omega r$ à la figure 1.

Le paramètre $Fr_{ref}$ peut être déterminé à partir de l'équation (3), les paramètres K0, K1 et K2 correspondent à des coefficients constants connus de la littérature ou déterminables empiriquement pour les besoins de l'application.

A partir de la relation (4), on peut intuitivement comprendre le fonctionnement du système. Par exemple, dès que le cycliste aborde une pente, son effort Fc reste sensiblement constant au début, et donc aussi la force moteur Fm liée au couple fourni par le cycliste. Cela entraîne une décélération sensible, donc l'apparition d'un terme d'inertie $Mt \cdot Av$ négatif

(ou terme -Mt•Av positif). Le terme -Pr$_{ref}$ augmente sensiblement compte tenu de la diminution de la vitesse. Ainsi, le paramètre ΔFr augmente et appelle une augmentation du niveau d'assistance. Lorsque le cycliste a repris sa vitesse de croisière, le terme d'inertie s'annule, et le terme Fr$_{ref}$ est constant. Cependant, pour compenser la pente, les forces Fm et Fc sont plus élevées qu'auparavant et provoquent une valeur ΔFr qui induit une augmentation durable du niveau d'assistance - le cycliste fournit alors moins d'effort par rapport à la force moteur Fm produite qu'avant d'aborder la pente.

Le fonctionnement est similaire lorsque le cycliste roule à plat et qu'un vent de face se lève, ou qu'il aborde un terrain avec plus de friction sur les roues.

Le système fonctionne réciproquement dans un cas de diminution de l'effort à l'avancement. Par exemple, lorsque le cycliste aborde une descente, le vélo accélère et l'effort de pédalage diminue, provoquant une valeur négative du paramètre ΔFr, et une diminution correspondante du niveau d'assistance.

Dans un autre cas, le cycliste roulant à plat décide d'aller plus vite. Il appuie plus fort sur les pédales, provoquant une augmentation des forces Fm et Fc. L'accélération Av résultante augmente et le terme d'inertie négatif -Mt-Av est antagoniste. Le terme négatif -Fr$_{ref}$, augmentant en valeur absolue avec la vitesse, est également antagoniste. Ainsi, le paramètre ΔFr a plutôt tendance à rester stable, n'appelant aucune modification du niveau d'assistance. En effet, même si l'utilisateur accélère, entraînant plus d'efforts pour vaincre la friction, on considère qu'il roule toujours dans les conditions nominales.

Le terme d'inertie Mt•Av apporte un fonctionnement cohérent au système en agissant pendant les phases transitoires, notamment en produisant une rapide augmentation du niveau d'assistance dès un ralentissement dû à une augmentation de la résistance à l'avancement et, au contraire, en modérant la variation du niveau d'assistance lors de phases d'accélération (ou de décélération) volontaires dans des conditions de terrain constantes.

Selon une variante, un système moins perfectionné peut omettre le terme d'inertie Mt•Av dans l'expression du paramètre ΔFr. Un tel système produira des résultats satisfaisants pendant les phases à vitesse constante, mais le fonctionnement sera moins cohérent pendant les phases transitoires, ce qui peut affecter l'agrément de conduite.

On peut appliquer au paramètre ΔFr un filtrage pour améliorer la fiabilité, en lissant le bruit et en supprimant des valeurs extrêmes pouvant être produites dans le calcul de l'accélération Av par dérivation. Le filtrage peut comporter les étapes suivantes avec des valeurs numériques applicable au domaine des vélos :

Borner ΔFr à l'intervalle [-300 N, 300 N], soit : ΔFr = min(300, max(-300, ΔFr))

Appliquer à un taux d'échantillonnage de 100 Hz un lissage de type exponentiel, ce qui se traduit à l'échantillon t par : ΔFr = α ΔFr$_{t-1}$ + (1 - α) ΔFr$_t$, avec α compris entre 0 et 1, de préférence proche de 1 (ex. 0,99).

Dans une application pratique, pour obtenir une réponse du type de la figure 2, on peut utiliser la relation suivante pour le coefficient de modulation :

$$\gamma = \gamma_{min} + (\gamma_{max} - \gamma_{min}) \bullet (\Delta Fr - \Delta Fr_{min})/(\Delta Fr_{max} - \Delta Fr_{min})$$

Avec :

$\gamma_{min}$ : coefficient minimum de modulation utilisé (ex. $\gamma_{min}$ = 1 dans un cas usuel)

$\gamma_{max}$ : coefficient maximum de modulation utilisé (ex. $\gamma_{max}$= 3)

ΔFr$_{min}$ : force minimum à partir de laquelle on souhaite moduler le niveau d'assistance (ex. ΔFr$_{min}$= 25 N)

ΔFr$_{max}$ : force maximum jusqu'à laquelle on souhaite moduler le niveau d'assistance (ex. ΔFr$_{max}$= 100 N)

Enfin, on borne y à l'intervalle [$\gamma_{max}$, $\gamma_{min}$].

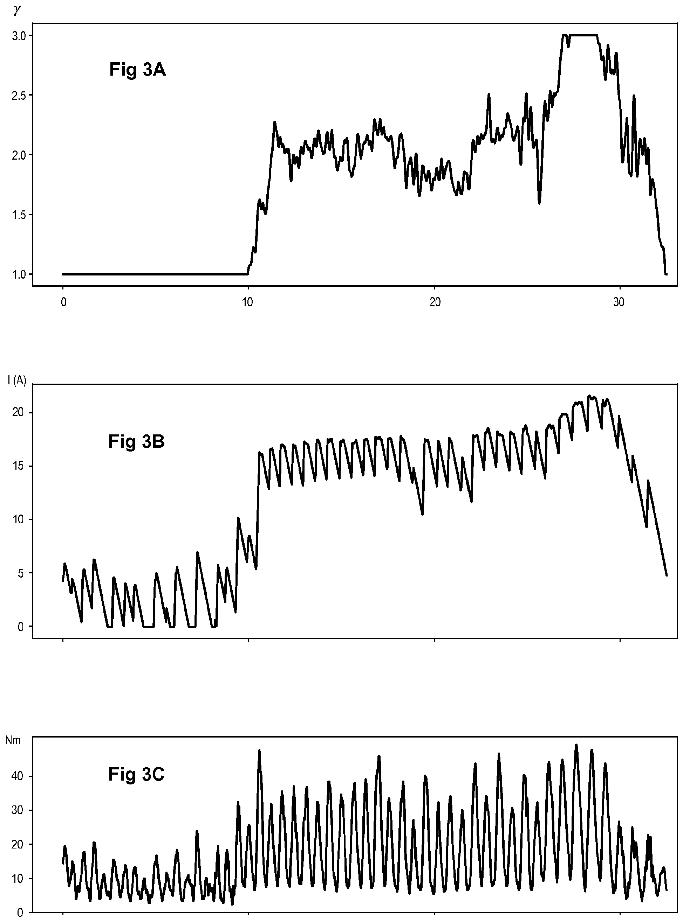

Les figures 3A à 3C sont des courbes illustrant des signaux instantanés mesurés dans un exemple d'utilisation réel du système. L'axe des abscisses représente le temps exprimé en secondes.

A 10 secondes, le cycliste amorce une ascension après avoir roulé sur du plat. La pente reste sensiblement constante jusqu'à 25 secondes, où la pente s'accentue jusqu'à environ 30 seconds. Ensuite la pente devient de nouveau nulle.

La figure 3A illustre la variation correspondante du coefficient de modulation γ. Il reste constant et égal à 1 jusqu'à 10 secondes. Ensuite il augmente rapidement vers 2 et oscille autour de 2. A environ 25 secondes, le coefficient y augmente rapidement vers 3 et reste saturé à 3 pendant quelques secondes. Après 30 secondes, le coefficient redescend vers 1.

La figure 3B illustre la variation correspondante du courant moteur I en ampères, traduisant directement le couple moteur. Le courant moteur suit l'allure générale du coefficient de modulation y, avec des oscillations marquées et régulières.

Entre 0 et 10 secondes, le courant oscille autour d'une valeur moyenne d'environ 2,5 A. A partir de 10 secondes, le couple se met à osciller autour d'une valeur moyenne d'environ 15 A.

Entre 25 et 30 secondes, le courant augmente de façon moins significative que le coefficient de modulation y, et oscille autour d'une valeur moyenne d'environ 20 A. Le courant moteur dépend aussi de l'effort de pédalage - s'il ne suit pas exactement le coefficient y, c'est que les conditions de pédalage sont différentes, ou bien qu'il est limité par le système de commande pour des raisons de sécurité.

La figure 3C illustre la variation du couple mesuré au pédalier en Nm. Le couple oscille autour d'une valeur moyenne au rythme du pédalage. Ce sont ces oscillations qui sont traduites dans le couple moteur de la figure 3B.

De 0 à 10 secondes, le couple oscille avec une amplitude d'environ 10 Nm. A partir de 10 secondes, le couple se met à osciller avec une amplitude d'environ 30 Nm.

Ainsi, le cycliste a triplé son effort de pédalage, mais en contrepartie le système offre deux fois plus d'assistance, signifiant que la proportion d'effort du cycliste par rapport à l'effort total requis (moteur + cycliste) diminue significativement par rapport à une situation sans compensation automatique.

A partir de 25 secondes, le couple se met à osciller avec une amplitude de près de 40 Nm, alors que le coefficient y atteint 3. Le coefficient y augmente plus significativement par rapport à la variation du couple au pédalier qu'à l'instant 10 s. Cela signifie que le système s'est adapté à des conditions d'avancement qui se sont durcies de façon abrupte. En effet, on observe que la fréquence des oscillations entre 25 et 30 secondes est plus faible que dans l'intervalle précédent, traduisant un ralentissement soudain du cycliste qui entraîne une importante contribution de la décélération dans le calcul du coefficient de modulation.

**Revendications**

**1.** Procédé de commande d'un moteur électrique de véhicule à pédalier, comprenant les étapes suivantes :

mesurer un couple (Iqs*) appliqué sur le pédalier ; et
appliquer au moteur électrique une commande (26) proportionnelle au produit du couple par un niveau d'assistance variable (y) ;
**caractérisé en ce qu'**il comprend les étapes suivantes :

déterminer un paramètre indicatif d'un écart ($\Delta Fr$) de la résistance à l'avancement
du véhicule par rapport à des conditions nominales, comme une combinaison linéaire de :

une mesure du couple du moteur (Iqs), indicative d'une force instantanée fournie par le moteur (Fm), la mesure du couple (Iqs*) appliqué sur le pédalier, indicative d'une force instantanée résultant du pédalage (Fc), et
une force nominale de résistance à l'avancement ($Fr_{ref}$), fonction de la vitesse et de coefficients de frottement constants déterminables pour des conditions de roulement nominales ;

moduler continument le niveau d'assistance (y) en fonction du paramètre indicatif de l'écart ($\Delta Fr$).

**2.** Procédé selon la revendication 1, dans lequel la combinaison linéaire implique également une différenciation de mesures de vitesse instantanée, indicative d'une accélération du véhicule (Av).

**3.** Procédé selon la revendication 2, dans lequel le paramètre indicatif de l'écart ($\Delta Fr$) est la somme de la force instantanée fournie par le moteur (Fm) et de la force instantanée fournie par le pédalage (Fc), à laquelle est soustraite la force nominale de résistance à l'avancement ($Fr_{ref}$) et une force d'inertie égale au produit de l'accélération (Av) par une masse moyenne (Mt) du véhicule avec sa charge.

**4.** Procédé selon la revendication 1, dans lequel le niveau d'assistance (y) augmente proportionnellement au paramètre indicatif de l'écart ($\Delta Fr$) entre deux seuils du paramètre indicatif.

**5.** Procédé selon la revendication 1, dans lequel le paramètre indicatif de l'écart ($\Delta Fr$) est soumis à un lissage.

**Patentansprüche**

**1.** Verfahren zum Steuern eines Elektromotors eines Fahrzeugs mit Tretlager, umfassend die folgenden Schritte:

Messen eines Drehmoments (Iqs*), das auf das Tretlager aufgebracht wird; und

Aufbringen auf den Elektromotor einer Steuerung (26) proportional zu dem Produkt des Drehmoments durch einen variablen Unterstützungsgrad (γ);

**dadurch gekennzeichnet, dass** es die folgenden Schritte umfasst:

Bestimmen eines Parameters, der auf eine Abweichung (ΔFr) des Widerstands gegen die Vorwärtsbewegung des Fahrzeugs relativ zu Nennbedingungen hinweist, wie eine lineare Kombination aus:

einer Messung des Motordrehmoments (Iqs), die auf eine momentane Kraft hinweist, die durch den Motor (Fm) bereitgestellt wird,

der Messung des Drehmoments (Iqs*), das auf das Tretlager aufgebracht wird, die auf eine momentane Kraft hinweist, die sich aus dem Treten (Fc) ergibt, und

einer Nennkraft eines Widerstands gegen die Vorwärtsbewegung ($Fr_{ref}$), die von der Geschwindigkeit und konstanten Reibungskoeffizienten abhängt, die für Nennbedingungen eines Fahrens bestimmbar sind;

kontinuierliches Modulieren des Unterstützungsgrads (γ) in Abhängigkeit von dem Parameter, der auf die Abweichung (ΔFr) hinweist.

2. Verfahren nach Anspruch 1, wobei die lineare Kombination auch eine Differentiation von Messungen der momentanen Geschwindigkeit beinhaltet, die auf eine Beschleunigung des Fahrzeugs (Av) hinweist.

3. Verfahren nach Anspruch 2, wobei der Parameter, der auf die Abweichung (ΔFr) hinweist, die Summe der momentanen Kraft, die durch den Motor (Fm) bereitgestellt wird, und der momentanen Kraft ist, die durch das Treten (Fc) bereitgestellt wird, von der die Nennkraft des Widerstands gegen die Vorwärtsbewegung ($Fr_{ref}$) und eine Trägheitskraft subtrahiert wird, die gleich dem Produkt aus der Beschleunigung (Av) und der durchschnittlichen Masse (Mt) des Fahrzeugs mit seiner Ladung ist.

4. Verfahren nach Anspruch 1, wobei der Unterstützungsgrad (γ) proportional zu dem Parameter zunimmt, der auf die Abweichung (ΔFr) zwischen zwei Schwellenwerten des Hinweisparameters hinweist.

5. Verfahren nach Anspruch 1, wobei der Parameter, der auf die Abweichung (ΔFr) hinweist, einer Glättung unterzogen wird.

**Claims**

1. A method for controlling an electric motor of a pedal-operated vehicle, comprising the following steps:

measuring a pedal torque (Iqs*) applied to a crankset of the vehicle; and

applying to the electric motor a control (26) proportional to the product of the torque and a variable assistance level (y);

**characterized in that** it comprises the following steps

determining a parameter indicative of a deviation (ΔFr) of vehicle drag forces from nominal conditions, as a linear combination of:

a measurement of a motor torque (Iqs), indicative of an instantaneous force supplied by the motor (Fm), the measured pedal torque (Iqs*), indicative of an instantaneous force resulting from pedaling (Fc), and a nominal drag force ($Fr_{ref}$), function of speed and constant friction coefficients determinable for nominal riding conditions; and

continuously modulating the assistance level (y) as a function of the parameter indicative of the drag deviation (ΔFr).

2. The method according to claim 1, wherein the linear combination also involves a differentiation of instantaneous speed measurements, indicative of a vehicle acceleration (Av).

3. The method according to claim 2, wherein the parameter indicative of the drag deviation (ΔFr) is the sum of the instantaneous force supplied by the motor (Fm) and the instantaneous force resulting from pedaling (Fc), from which is subtracted the nominal drag force ($Fr_{ref}$) and a force of inertia equal to the product of the acceleration (Av) and an average mass (Mt) of the vehicle with its load.

4. The method according to claim 1, wherein the assistance level (y) increases proportionally to the parameter indicative of the drag deviation ($\Delta$Fr) between two thresholds of the parameter.

5. The method according to claim 1, wherein the parameter indicative of the drag deviation ($\Delta$Fr) is subjected to smoothing.

**Fig 1**

**Fig 2**

Fig 3A

Fig 3B

Fig 3C

**EP 4 463 360 B1**

**RÉFÉRENCES CITÉES DANS LA DESCRIPTION**

**Documents brevets cités dans la description**

- US 2021197925 A1